# DEMANDE DE BREVET EUROPEEN

(11) **EP 1 623 819 A1**
(43) Date de publication de la demande: **08.02.2006**
(21) Numéro de dépôt: 05016499.5
(22) Date de dépôt: 29.07.2005
(51) Int. Cl.: B29D 30/24, B60C 9/07

(54) **Tambour conformant à prises sous talon rotatives**

(30) Priorité: 02.08.2004 FR 0408557
(71) Demandeur: Société de Technologie Michelin, 63000 Clermont-Ferrand (FR); MICHELIN RECHERCHE ET TECHNIQUE S.A., 1763 Granges-Paccot (CH)
(72) Inventeur: Auclair, Jacques, 63800 Cournon D'Auvergne (FR)
(74) Mandataire: Bauvir, Jacques

(57) **Abrégé**

Tambour de conformation (T) de carcasse (C) de pneumatique comprenant deux flasques (4, 4'), montés sur un arbre (1) d'axe XX' et se déplaçant axialement sur ledit arbre, lesdits flasques comportant des gorges de réception circonférentielles (6, 6') destinées à maintenir les talons du pneumatique à conformer, tout en formant un contact étanche avec lesdits talons, et dans lequel la conformation du pneumatique s'effectue par augmentation de la pression d'air à l'intérieur du volume (V) délimité par les flasques et par la surface interne du pneumatique (C), et par rapprochement des flasques (4, 4'), tambour caractérisé en ce que, pendant la conformation, au moins un des flasques (4, '4) est entraîné en rotation autour dudit axe XX' par rapport à l'autre flasque.

## Description

L'invention concerne un procédé de réalisation d'un pneumatique comprenant une armature de carcasse dont les éléments de renforcement sont radiaux dans les flancs et présentent un angle oblique par rapport à la direction circonférentielle dans les régions situées dans le sommet ou dans la zone située à proximité du talon.

Plus particulièrement l'invention propose un tambour de conformation adapté permettant de mettre en oeuvre le procédé.

Les pneumatiques à carcasse radiale sont connus depuis de nombreuses années et l'étude de leur mode de fonctionnement ne cesse de faire l'objet d'améliorations.

Il est d'usage de partager le pneumatique en trois zones distinctes comprenant la zone sommet, comportant une armature sommet et une bande de roulement destinée à entrer en contact avec le sol une zone de talon destinée à assurer l'accrochage du pneumatique sur la jante et une zone de flanc destinée à réaliser la jonction entre les deux zones précédemment citées.

Ces pneumatiques comportent des armatures de renfort carcasse ou de renfort sommet, composées de tronçons de fils métalliques ou textiles enrobés dans un mélange caoutchouteux afin de constituer des nappes de renfort. Les tronçons de fils font un angle précis avec la direction circonférentielle ; On parlera d'un angle voisin de 90° pour une nappe de renfort dite radiale généralement utilisée pour réaliser le renfort carcasse, et d'une nappe à angle plus fermé, inférieur à 90°, pour les nappes de renfort sommet. La ceinture de renfort sommet est généralement constituée d'au mois deux nappes dont les angles sont de signes opposés. Une nappe dite à zéro degré sera constituée de fils de renfort formant un angle voisin de 0° avec la direction circonférentielle.

Il est connu depuis longtemps que l'utilisation d'une armature de carcasse radiale, formée par des fibres de renfort orientées dans une direction perpendiculaire à la direction circonférentielle, améliore la performance des pneumatiques. Toutefois l'analyse du mode de fonctionnement de ce type de pneumatique met en évidence que seule la portion d'armature de carcasse située dans les flancs nécessite d'être véritablement radiale pour conférer au pneumatique toutes les qualités attribuées à cette technologie.

Ainsi il a été mis en évidence que la portion d'armature de carcasse située sous l'armature sommet pouvait être superflue.

C'est la raison pour laquelle de nombreux développements ont été faits pour modifier l'angle de la nappe de renfort carcasse dans la zone sommet afin de lui conférer des propriétés lui permettant de contribuer à la formation de l'armature sommet, en coopération avec une autre nappe constituée d'éléments de renforcement dont l'angle d'orientation par rapport à la direction circonférentielle serait de signe opposé à celui que font les éléments d'armature carcasse dans la zone située sous le sommet. Dans la zone de l'armature sommet, les angles formés par les fils de la nappe de renfort carcasse et par la nappe de renfort sommet par rapport à la direction circonférentielle sont généralement compris entre 15° et 40°.

A titre d'exemple, ce type de pneumatique est décrit dans le brevet FR 1 413 102. Ce pneumatique comprend une armature de carcasse constituée de fils disposés radialement ou sensiblement radialement dans la zone du talon et dans la zone flanc, et qui ont une orientation s'écartant sensiblement de l'orientation radiale sur une partie de la zone où s'étend l'armature sommet.

A l'appui de ces développements de nombreux modes de réalisation ont été proposés. Ces procédés exploitent les propriétés offertes par les effets de la triangulation lorsque deux nappes, préalablement superposées et adhérant l'une à l'autre, présentent des angles différents et opposés par rapport à une direction circonférentielle et sont étirées dans ce même sens. Cet effet se traduit par la diminution de l'orientation des angles de ces nappes par rapport à la direction circonférentielle.

Une description complète de ce mécanisme dit de triangulation est donnée dans la publication FR 2 797 213.

Pour réaliser cette triangulation il convient dans un premier temps, comme cela est exposé dans le brevet FR 1 413 102, de disposer successivement sur un tambour de confection de forme sensiblement cylindrique une ou plusieurs nappes de renfort carcasse dont les fils sont orientés radialement puis de disposer une nappe de renfort sommet ayant des fils orientés obliquement par rapport aux fils de carcasse, de faire adhérer ces différentes nappes entre elles pour former ce qu'il est conventionnellement convenu d'appeler une carcasse. Puis dans un deuxième temps de conformer la carcasse sur un tambour de conformation comportant un diaphragme, pour former une ébauche de pneumatique d'une forme sensiblement toroïdale.

Pendant la phase de conformation, pendant laquelle on transforme une ébauche de pneumatique de forme cylindrique en une ébauche de pneumatique de forme toroïdale, l'augmentation du diamètre de la partie centrale destinée à constituer la zone sommet revient à étirer la nappe de renfort sommet et la nappe de renfort carcasse dans le sens longitudinal on encore dans le sens circonférentiel, et à conférer aux fils de renfort carcasse situés dans cette zone sommet et aux fils de la nappe de renfort sommet des angles ayant une valeur absolue inférieure.

Une alternative à la publication FR 1 413 102 est exposée dans le brevet FR 1 508 652 dans lequel la conformation ou le bombage de la carcasse de forme cylindrique s'effectue directement dans la presse de vulcanisation.

Ces différents procédés présentent néanmoins l'inconvénient de mal maîtriser la formation de cette triangulation et sont très sensibles aux variations de rigidité des nappes avec pour conséquence que les angles de nappes ne présentent pas une bonne reproductibilité d'un pneumatique à l'autre, et que les développements des dits pneumatiques peuvent varier sensiblement.

L'invention a pour objet un tambour de conformation ainsi qu'un procédé permettant d'offrir une bonne reproductibilité de la triangulation pour la réalisation d'un pneumatique dont la ceinture de renfort sommet est formée par la nappe de renfort carcasse et la nappe de renfort sommet.

Ainsi, il a été mis en évidence que la maîtrise de la rotation axiale des talons, tout au long de l'opération de conformation, permettait de contrôler de manière extrêmement précise l'angle formé par les fils de renfort carcasse dans la zone sommet ainsi que l'angle des fils de la nappe de renfort sommet mais également la radialité des fils de renfort carcasse dans la zone flanc tout en conservant une très bonne reproductibilité du diamètre du bandage à la fin de l'opération de conformation.

On observera en effet, que la variation angulaire des fils de renfort carcasse sous la partie du sommet s'accompagne d'un déplacement circonférentiel et de directions opposées des fils situé dans les flancs. Et chacun des procédés évoqué ci-dessus ne permet pas, pendant la phase de conformation, de maîtriser cette rotation, laquelle est partiellement empêchée soit par le diaphragme de conformation (FR 1 413 102), soit par la presse de vulcanisation (FR 1 508 652).

Le tambour de conformation de carcasse de pneumatique conforme à l'invention comprend deux flasques, montés sur un arbre d'axe XX' et qui se déplacent axialement sur ledit arbre. Les flasques comportent des gorges de réception circonférentielles destinées à maintenir les talons du pneumatique à conformer, tout en formant un contact étanche avec lesdits talons. Pendant la conformation les flasques se déplacent axialement l'un par rapport à l'autre et au moins un des flasques est entraîné en rotation autour dudit axe XX' par rapport à l'autre flasque, de manière à permettre aux talons du pneumatique d'effectuer une rotation de l'un par rapport à l'autre librement ou d'un angle prédéterminé autour de l'axe XX'.

Le procédé de réalisation d'un pneumatique consiste à réaliser une ébauche de carcasse de pneumatique sur un tambour cylindrique traditionnel en déposant successivement une nappe d'armature carcasse constituée de fils de renforcement faisant un angle donné avec la direction circonférentielle, les éléments annulaires du talon, à retourner les bords de nappe pour former le retournement carcasse, et enfin à déposer une nappe d'armature sommet composée de fils de renforcement faisant un angle avec la direction circonférentielle, cet angle étant de signe opposé à l'angle formé par la nappe de renfort carcasse. Il convient à ce stade d'assurer une bonne liaison entre la nappe de renfort carcasse et la nappe de renfort sommet en favorisant l'adhésion de l'une par rapport à l'autre.

La carcasse ainsi réalisée est placée sur un tambour de conformation, tel que décrit ci-dessus, et sur lequel on procède à l'opération de conformation proprement dite. Cette opération consiste à faire varier le volume intérieur formé par la carcasse et les flasques du tambour, et à rapprocher axialement lesdits flasques l'un par rapport à l'autre, de manière à faire prendre à la carcasse une forme toroïdale ; le diamètre de la zone sommet augmente et les valeurs absolues des angles que font les fils de renforts de la nappe de renfort sommet ainsi que les fils de la partie de la nappe de renfort carcasse située sous le sommet avec la direction circonférentielle se réduisent sous l'effet de la triangulation.

On observera que les fils de la nappe carcasse situés dans la zone flanc ne sont pas soumis à cette triangulation et ont naturellement tendance à se radialiser pour finir par faire un angle sensiblement égal à 90° avec la direction circonférentielle.

Cette radialisation a pour effet de diminuer la distance circonférentielle entre les deux points d'ancrage d'un même fil de renfort carcasse sur chacune des tringles. Ce rapprochement provoque une rotation des talons autour de l'axe XX' en sens inverse l'un de l'autre.

La montée en pression s'effectue directement dans l'enceinte délimitée par la paroi intérieure de l'ébauche de pneumatique et par les flasques sur lesquelles reposent, par un contact étanche à l'air, les talons dudit pneumatique. En procédant de cette manière, on supprime tous les éléments susceptibles d'entraver la triangulation du sommet ou la libre rotation de talons autour de l'axe de rotation du tambour de conformation.

La rotation des flasques autour de leur axe peut être libre, et résulter uniquement du mouvement circonférentiel des talons pendant la conformation, ou contrôlée par des moyens mécaniques de manière à améliorer la reproductibilité du procédé.

Une fois la conformation terminée, l'ébauche de pneumatique reçoit les profilés destinés à en assurer la finition parmi lesquels on comptera une bande de roulement et éventuellement une deuxième nappe de renfort sommet.

Du fait de la bonne reproductibilité du procédé il est possible de déposer une nappe de renfort sommet à zéro degré sur le sommet ainsi réalisé avant la pose de la bande de roulement.

Les avantages liés à la mise en oeuvre d'un tambour conforme à l'invention apparaîtront dans la description ci après, laquelle se propose de donner des exemples, non limitatifs, de réalisation et d'utilisation, en s'appuyant sur les figures dans lesquelles :
- la figure 1 représente un schéma de principe d'un tambour conforme à l'invention,
- les figures 2, 3 et 4 représentent schématiquement une illustration des étapes de conformation d'une ébauche de pneumatique,
- les figures 5, 6 et 7 représentent schématiquement les étapes de la triangulation de la zone sommet et de la zone basse, ainsi que la radialisation de la zone flanc,
- les figures 8, 9 et 10 représentent schématiquement les étapes de la triangulation de la zone basse seule, ainsi que la radialisation de la zone flanc et de la zone sommet,
- la figure 11 représente une vue en coupe d'un pneumatique.

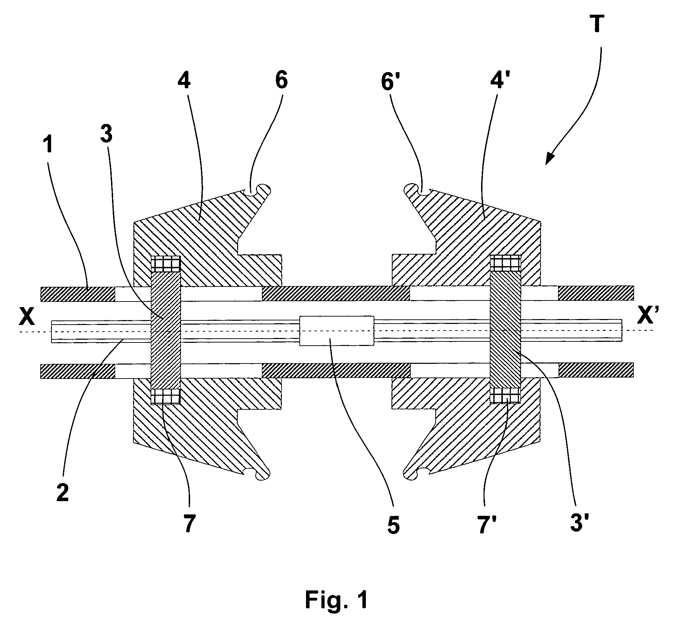

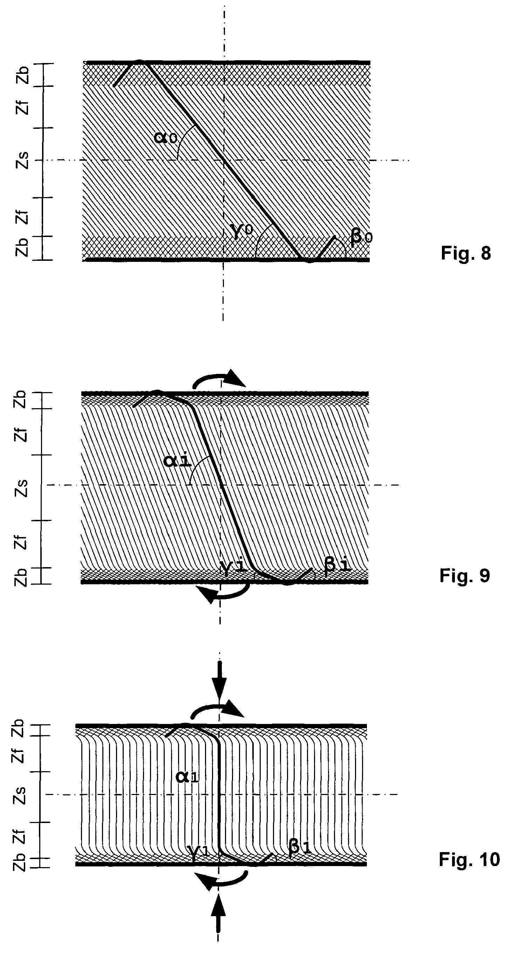

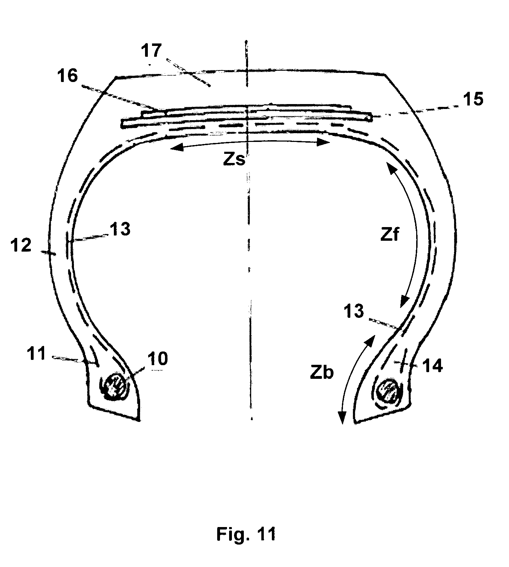

Dans ce qui suit, on désignera par les mêmes références les éléments ayant des fonctions identiques, tels que représentés sur les figures 1 à 11.

La figure 1 représente une vue en coupe schématique d'un tambour de conformation T conforme à l'invention dans lequel un arbre 1 d'axe XX' porte deux flasques 4 et 4', dont au moins un peut coulisser axialement sur ledit arbre 1. L'arbre 1 est relié à un châssis, non représenté, par l'intermédiaire d'une liaison motorisée en rotation.

Des coulisseaux 3 et 3' sont entraînés par une vis 2, motorisée en rotation par un moteur 5, de manière à assurer le déplacement axial des flasques. Des systèmes d'entraînement motorisées, 7, 7', disposés sur les coulisseaux 3 et 3', entraînent en rotation et en sens opposés, les flasques 4 et 4' autour de l'axe XX'.

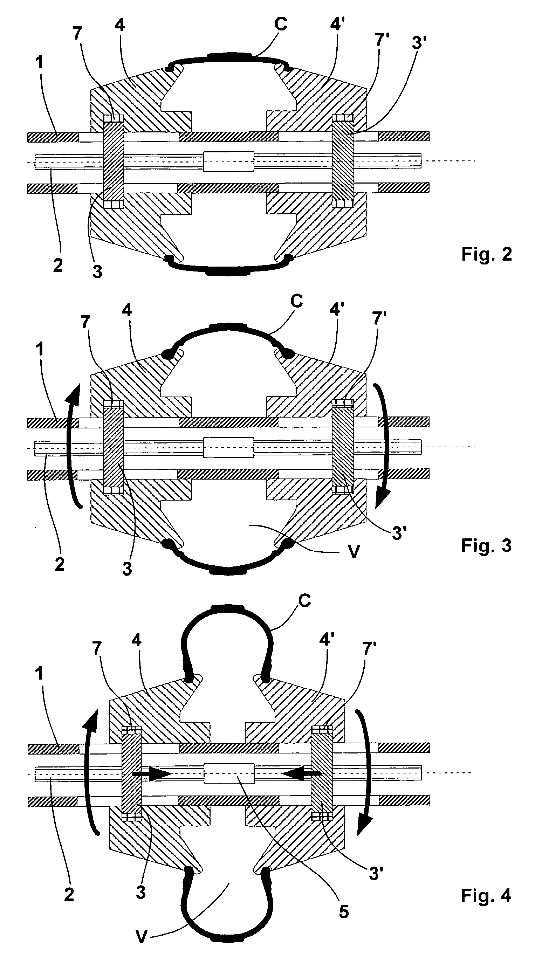

Sur chacun des flasques 4 et 4' sont disposées des gorges de réception 6 et 6' circonférentielles destinées à recevoir les talons d'une carcasse C à conformer comme cela est illustré sur les figures 2, 3 et 4. On choisira de préférence un procédé de conformation dit sans membrane, de manière à ne pas gêner les mouvements dans le sens circonférentiel des différentes parties de la carcasse en cours de conformation.

Aussi les gorges de réception sont conçues pour assurer le maintien des talons pendant la conformation de la carcasse mais également pour former une liaison étanche à l'air permettant d'augmenter la pression à l'intérieur du volume V délimité par les flasques et par la carcasse de pneumatique. La liaison entre les flasques 4 et 4' et l'arbre 1 devra, pour les mêmes raisons, être étanche à l'air afin d'autoriser tout à la fois la conformation de la carcasse et la rotation d'au moins un d'entre eux.

Les figures 2, 3 et 4 illustrent les principales étapes de la phase de conformation d'une carcasse C constituant l'ébauche d'un pneumatique.

La carcasse est disposée sur le tambour T de manière à ce que les talons soient maintenus par les deux gorges de réception 6 et 6' comme cela est représenté sur la figure 2.

L'augmentation de la pression à l'intérieur du volume V délimité par les flasques et par la carcasse de pneumatique provoque le bombement de la carcasse et une rotation naturelle des flasques autour de l'axe XX' du simple fait de la radialisation des fils de la nappe de renfort carcasse situés dans la zone flanc comme cela est illustré sur la figure 3.

La figure 4 représente la dernière phase de la conformation au cours de laquelle le moteur 5 commande le rapprochement axial des flasques 4 et 4' l'un en direction de l'autre.

Pendant cette phase ultime de la conformation, les systèmes d'entraînement motorisés 7 et 7' provoquent la rotation des flasques 4 et 4' autour de l'axe XX' d'un angle prédéterminé. A cet effet les systèmes d'entraînement motorisées 7 et 7' peuvent utilement comporter un indexeur permettant de piloter avec précision ce mouvement de rotation.

Le mode de réalisation du tambour de conformation conforme à l'invention peut faire l'objet de nombreuses variantes équivalentes à celle décrite ci-dessus. Ainsi dès lors que l'on utilise un tambour de conformation sans membrane, une forme équivalente de réalisation consiste à n'entraîner qu'un seul des deux flasques en rotation.

Le moyen de mise en rotation des flasques par rapport à l'axe XX' peut être formé d'éléments mécaniques internes au tambour tels que des systèmes d'entraînement motorisées 7 et 7' mais également de moyens externes au dit tambour tels que des moyens mécaniques reliés au châssis du tambour et agissant sur un des deux flasques en combinaison avec une rotation de l'arbre 1.

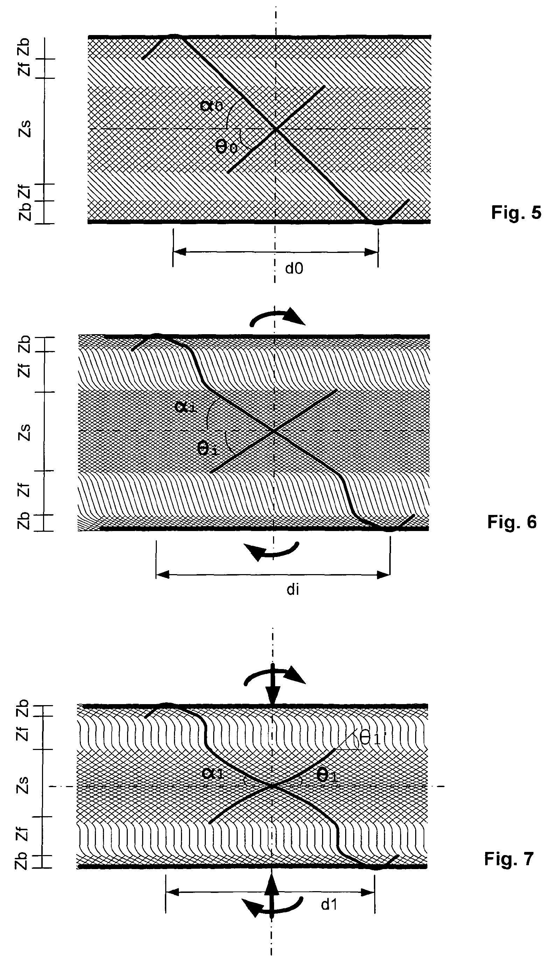

Les figures 5, 6 et 7 illustrent le phénomène de triangulation dont il est fait usage dans la mise en oeuvre du procédé.

La nappe de renfort carcasse déposée sur le tambour de confection fait un angle α₀ avec la direction longitudinale ou circonférentielle et la nappe de renfort sommet fait un angle θ₀ avec cette même direction. Les angles α₀ et θ₀ sont de signes opposés. Les points d'ancrage d'un fil de la nappe de renfort carcasse autour de la tringle sont situés à une distance circonférentielle d₀.

Lors de la mise en pression du volume V tel qu'illustré sur la figure 3, les valeurs des angles α et θ des fils de renfort de la partie de nappe de renfort carcasse située dans la zone sommet Zs et de la nappe de renfort sommet passent à des valeurs αᵢ et θᵢ dont les valeurs absolues sont inférieures respectivement aux valeurs absolues des angles α₀ et θ₀. La partie de nappe carcasse située dans la zone des flancs Zf voit la valeur absolue de son orientation angulaire augmenter vers la direction radiale. Les talons commencent à tourner en sens inverse l'un de l'autre et les points d'ancrage d'un fil de la nappe de renfort carcasse passent à une distance circonférentielle d₁ différente de d₀.

En rapprochant les flasques l'un de l'autre pour achever la conformation, les talons continuent de tourner en sens opposés, et les fils de la nappe carcasse situés dans la zone flanc Zf atteignent alors une position proche de la direction radiale. Les angles α et θ des fils de renfort de la partie de nappe de renfort carcasse située dans la zone sommet Zs et de la nappe de renfort sommet passent à des valeurs α₁ et θ₁. dont les valeurs absolues sont inférieures respectivement aux valeurs absolues des angles αᵢ et θᵢ ; Les points d'ancrage d'un même fil de la nappe de renfort carcasse sont situés à une distance circonférentielle d₁ différente de dᵢ et de d₀. La rotation relative d'une valeur prédéterminée autour de l'axe XX' des flasques 4 et 4' l'un par rapport à l'autre permet d'obtenir une distance circonférentielle d₁ constante et d'ajuster d'une manière précise la circonférence au sommet de la carcasse en fin de conformation ainsi que la valeur des angles α₁ et θ_{1.}

On observera que ce pilotage des flasques en rotation s'avère particulièrement utile en fin de conformation de manière à ajuster les positions respectives des nappes, mais qu'il est possible de laisser les flasques tourner pratiquement librement en fonction des contraintes circonférentielles transmises aux talons pendant la première phase de ladite opération de conformation.

La détermination de l'angle de rotation des flasques l'un par rapport à l'autre et de la valeur des angles α₀ et θ₀ de manière à obtenir les valeurs finales α₁ et θ₁ fait appel aux connaissances de l'homme de l'art qui pourra trouver les références nécessaires dans la publication FR 2 797 213 déjà citée.

Les figures 5 à 10 illustrent la possibilité d'utiliser le même tambour pour opérer une triangulation des fils de renfort de la nappe carcasse dans la zone du talon Zb. Ceci est possible lorsque l'on a réalisé une carcasse de pneumatique dont les fils font un angle α₀ inférieur à 90° avec la direction circonférentielle.

Au moment du retournement de la nappe de renfort carcasse autour de la tringle il est possible de faire adhérer la nappe sur elle-même. Les fils de renfort font alors un angle β₀ avec la direction circonférentielle ; L'angle β₀ est de valeur sensiblement égale et de signe opposé à l'angle γ₀ que font les fils de renfort carcasse dans la zone du talon Zb, l'angle γ₀ étant égal, avant que ne commence la conformation, à l'angle α₀ que font les fils de renfort de la nappe carcasse entre les deux tringles avec la direction circonférentielle.

En conformant la carcasse, les angles βᵢ et γᵢ se referment pour atteindre respectivement, en fin de conformation, les valeurs β₁ et γ₁. En l'absence de nappe de renfort sommet les fils de la nappe de renfort carcasse situés dans les zones flancs Zf et dans la zone sommet Zs se radialisent par rapport à la direction circonférentielle.

Le procédé de réalisation d'un pneumatique tel que représenté sur la vue schématique en coupe de la figure 11 consiste à
- déposer sur un tambour de confection cylindrique au moins une nappe d'armature carcasse 13 constituée de fils de renforcement faisant un angle α₀ avec la direction circonférentielle,
- déposer les éléments annulaires du talon, comprenant les tringles 10, les profilés et gommes de remplissage de talon 14,
- retourner les bords de nappe autour des tringles 10 pour former le retournement carcasse 11,
- déposer la nappe d'armature sommet 15 composée de fils de renforcement faisant un angle θ₀ avec la direction circonférentielle, ledit angle θ₀ étant de signe opposé à α₀, et faire adhérer, si nécessaire, la nappe de renfort sommet 15 à la nappe de renfort carcasse 13,
- déposer les profilés caoutchoutiques formant la protection du flanc 12,
- extraire la carcasse de forme cylindrique ainsi réalisée du tambour de confection et la disposer sur un tambour de conformation T tel que décrit précédemment,
- conformer la carcasse en faisant pivoter d'un angle prédéterminé autour de l'axe XX' au moins un des flasques 4, 4' du tambour de conformation maintenant les talons, tout en rapprochant axialement lesdits flasques 4, 4' l'un vers l'autre, jusqu'à ce que les fils de renfort carcasse situés dans la zone flanc soient disposés sensiblement radialement,
- terminer la réalisation de l'ébauche d'enveloppe de pneumatique en posant les profilés caoutchoutiques destinés à former la zone sommet et comprenant une bande de roulement 17 et éventuellement une deuxième nappe de renfort sommet 16,
- vulcaniser l'ébauche de pneumatique dans un moule.

Il convient de noter, comme cela est représenté sur les figures 5 à 7 que la triangulation des nappes dans la zone sommet a pour effet, à l'issue de l'étape de conformation, de disposer les fils de renfort à des angles α₁ et θ₁ par rapport à la direction circonférentielle. Toutefois, en raison d'une part de la nature caoutchoutique de la liaison réalisée entre la nappe de renfort carcasse et la nappe de renfort sommet, mais d'autre part de la forme du profil transversal proche de la courbe d'équilibre pneumatique de la carcasse en fin de conformation, lequel profil a pour conséquence de présenter un développement circonférentiel supérieur au centre de la zone sommet qu'en bordure des nappes, entraînant un taux d'élongation et donc de triangulation différent au sommet que sur les bords de nappe, les angles α₁ et θ₁ ont tendance à s'ouvrir progressivement en bord de nappe pour atteindre des angles α₁' et θ₁' supérieurs en valeur absolue respectivement à α₁ et θ₁.

Ce type de sommet dit à angle variable en bord de nappe est connu et décrit à titre d'exemple dans la publication FR 2 037 520, ou encore la publication FR 1 584 691, et présente l'avantage d'un confort accru et d'une plus grande résistance au port de charges élevées.

Le procédé de réalisation divulgué dans la publication FR 2 037 520 fait état de l'utilisation de systèmes anticollants disposés à l'interface des bordures de nappes, lequel procure à ces dernières un degré de liberté lors de la triangulation ayant pour conséquence la formation d'un angle plus ouvert en bord de nappe que sur la partie centrale de la nappe. Les procédés décrits dans la publication FR 1 584 691 ou encore dans la publication FR 1 561 130 proposent de couder les "fils cords" dans les régions marginales ou de bordure ; cette opération étant réalisée pendant la réalisation de la carcasse.

Le procédé conforme à l'invention revendiquée dans le présent document permet d'obtenir un effet similaire sans qu'il soit nécessaire d'utiliser de tels artifices.

Enfin ce procédé de mise en oeuvre d'un tambour conforme à l'invention, peut s'accommoder d'un grand nombre de variantes d'exécution.

Une première variante consiste à déposer une nappe de renfort carcasse faisant un angle α₀ proche de la direction radiale. L'effet de la triangulation, lors de la conformation, ne se fera alors sentir que dans la zone sommet Zs.

Une deuxième variante consiste à déposer la première nappe de renfort sommet 15 à un stade intermédiaire de la conformation dans le but d'obtenir des triangulations d'angles différents dans la zone basse et dans le sommet.

Une autre alternative consiste à réaliser des enveloppes de pneumatiques dans lesquelles les retournements 11 de la nappe de renfort carcasse 13 font un angle donné β₁ avec la direction circonférentielle. La portion de nappe située dans la zone talon Zb faisant elle-même un angle γ₁ avec la direction circonférentielle. Mais il est aussi possible de ne réaliser le retournement de la nappe carcasse 11 qu'après avoir réaliser la conformation. Dans ces conditions, la nappe de renfort carcasse est sensiblement radiale dans la zone du talon Zb, en revanche le retournement fait un angle β avec la direction circonférentielle. En réalisant le retournement de la nappe carcasse à un stade intermédiaire de la conformation il est encore possible de combiner les effets décrits ci-dessus.

Enfin ce procédé peut s'adapter sans difficultés aux différentes technologies de tambour de confection de pneumatiques en particulier lorsque les phases de réalisation de la carcasse cylindrique, de conformation et de finition de l'ébauche de pneumatique se font sur un tambour unique.

## Revendications

1. Tambour de conformation (T) de carcasse (C) de pneumatique comprenant deux flasques (4, 4'), montés sur un arbre (1) d'axe XX' et se déplaçant axialement sur ledit arbre, lesdits flasques comportant des gorges de réception circonférentielles (6, 6') destinées à maintenir les talons du pneumatique à conformer tout en formant un contact étanche avec lesdits talons, et dans lequel la conformation du pneumatique s'effectue par augmentation de la pression d'air à l'intérieur du volume (V) délimité par les flasques et par la surface interne du pneumatique (C), et par rapprochement des flasques (4, 4'), tambour **caractérisé en ce que**, au moins un des flasques (4, '4) peut être entraîné en rotation autour dudit axe XX' par rapport à l'autre flasque.

2. Tambour de conformation selon la revendication 1, dans lequel la rotation des flasques (4, 4') autour de l'axe XX' est entraînée par la rotation des talons autour dudit axe XX' .

3. Tambour de conformation selon la revendication 1, dans lequel la rotation des flasques (4, 4') autour de l'axe XX' est entraînée par des éléments motorisés (7, 7').

4. Tambour de conformation selon la revendication 1, dans lequel un seul flasque (4, 4') effectue une rotation par rapport à l'autre flasque autour de l'axe XX'.

5. Procédé de réalisation d'un pneumatique comportant une armature de carcasse (13) constituée de fils de renforcement enrobés dans un mélange caoutchouteux et disposés sensiblement radialement dans la zone (Zf) des flancs, lesdits fils de renforcement ayant, sur une partie de la zone (Zs) où s'étend une armature sommet, une orientation α₁ par rapport à la direction circonférentielle s'écartant sensiblement de l'orientation radiale, ladite armature sommet étant composée d'au moins une couche d'éléments de fils de renforcement enrobés dans un mélange caoutchouteux (15) et faisant un angle θ₁ par rapport à la direction circonférentielle et de signe opposé à α₁, procédé comprenant les étapes suivantes :
- déposer sur un tambour de confection cylindrique au moins une nappe d'armature carcasse (13) constituée de fils de renforcement faisant un angle α₀ avec la direction circonférentielle, la valeur absolue de α₀ étant supérieure à celle de α₁,
- déposer les éléments annulaires du talon, comprenant les tringles (10), les profilés et gommes de remplissage de talon (14),
- retourner les extrémités de la nappe de renfort carcasse autour de la tringle (10) pour former le retournement carcasse (11), et faire adhérer le retournement (11) à la nappe carcasse (13),
- déposer une première nappe d'armature sommet (15) composée de fils de renforcement faisant un angle θ₀ avec la direction circonférentielle et de signe opposé à α₀, la valeur absolue dudit angle θ₀ étant supérieure à la valeur absolue de l'angle θ₁, et faire adhérer la nappe de renfort sommet (15) à la nappe de renfort carcasse (13),
- déposer les profilés caoutchoutiques formant la protection du flanc 12,
- extraire la carcasse de forme cylindrique ainsi réalisée du tambour de confection et la disposer sur un tambour de conformation (T) comprenant des flasques (4, 4'), montés sur un arbre (1) d'axe XX' et se déplaçant axialement sur ledit arbre (1), lesdits flasques (4, 4') comportant des gorges de réception circonférentielles (6, 6') destinées à maintenir les talons du pneumatique à conformer tout en formant un contact étanche avec lesdits talons, et dans lequel la conformation du pneumatique s'effectue par augmentation de la pression d'air à l'intérieur du volume (V) délimité par les flasques et par la carcasse de pneumatique (C) et par rapprochement des flasques (4, 4'), et dont au moins un des flasques est entraîné en rotation autour de l'axe XX' par rapport à l'autre flasque,
- conformer la carcasse, en faisant pivoter l'un par rapport à l'autre les flasques maintenant les talons (4, 4'), d'un angle prédéterminé autour de l'axe XX' du tambour de conformation, tout en rapprochant axialement lesdits flasques (4, 4') l'un vers l'autre, jusqu'à ce que les fils de renfort carcasse situés dans la zone flanc soient disposés sensiblement radialement,
- terminer la réalisation de l'ébauche d'enveloppe de pneumatique en posant les mélanges caoutchouteux destinés à former la zone sommet et comprenant une bande de roulement (17) et éventuellement une deuxième nappe de renfort sommet (16),
- vulcaniser l'ébauche de pneumatique dans un moule.

6. Procédé de réalisation d'un pneumatique selon la revendication 5 dans lequel l'angle α₀ est sensiblement égal à 90°.

7. Procédé de réalisation d'un pneumatique selon la revendication 5 dans lequel les fils de renforcement de la première nappe de renfort sommet (15) font, en bord de nappe, un angle θ₁' avec la direction circonférentielle supérieur en valeur absolue à l'angle θ₁.

8. Procédé de réalisation d'un pneumatique selon la revendication 5 dans lequel la deuxième nappe de renfort sommet (16) est une nappe dite à zéro degré.

9. Procédé de réalisation d'un pneumatique selon la revendication 5 dans lequel l'étape consistant à retourner la nappe carcasse (11) autour de la tringle (10) et l'étape consistant à déposer les profilés caoutchoutiques formant la protection du flanc (12) se font au cours de l'étape consistant à conformer la carcasse.

10. Procédé de réalisation d'un pneumatique selon la revendication 5 dans lequel la première nappe d'armature sommet (15) est posée à un stade intermédiaire de l'opération de conformation.
